# EUROPÄISCHE PATENTSCHRIFT

(11) **EP 3 932 701 B1**
(45) Veröffentlichungstag und Bekanntmachung des Hinweises auf die Patenterteilung: **15.11.2023**
(21) Anmeldenummer: 21180934.8
(22) Anmeldetag: 22.06.2021
(51) Int. Cl.: B60D 1/02, B60D 1/62

(54) **FLURFÖRDERZEUG MIT EINER MAULKUPPLUNG, SYSTEM AUS EINEM FLURFÖRDERZEUG UND EINEM ANHÄNGER SOWIE VERFAHREN ZUM ANKUPPELN EINES ANHÄNGERS AN EIN FLURFÖRDERZEUG**
INDUSTRIAL TRUCK WITH A JAW CLUTCH, SYSTEM COMPRISING AN INDUSTRIAL TRUCK AND A TRAILER AND METHOD FOR COUPLING A TRAILER TO AN INDUSTRIAL TRUCK
CHARIOT DE MANUTENTION DOTÉ D'UNE CHAPE D'ATTELAGE SYSTÈME COMPOSÉ D'UN CHARIOT DE MANUTENTION ET D'UNE REMORQUE, AINSI QUE PROCÉDÉ D'ATTELAGE D'UNE REMORQUE À UN CHARIOT DE MANUTENTION

(30) Priorität: 02.07.2020 DE 102020117511
(43) Veröffentlichungstag der Anmeldung: 05.01.2022
(73) Patentinhaber: Jungheinrich Aktiengesellschaft, 22047 Hamburg (DE)
(72) Erfinder: HAK, Ralf, 21033 Hamburg (DE); RIECKMANN, Jan, 21379 Scharnebeck (DE); MEYER, Hinrich, 21406 Barnstedt (DE); JAHN, Gunnar, 20359 Hamburg (DE); ZIZER, Konstantin, 21337 Lüneburg (DE); BASSANELLO, Joscha, 21335 Lüneburg (DE)
(74) Vertreter: Seemann & Partner Patentanwälte mbB

(56) Entgegenhaltungen:
- EP-A1- 3 047 986
- EP-A1- 3 511 289
- WO-A1-2018/228944
- DE-A1- 10 011 442
- DE-A1- 19 931 746
- US-A1- 2003 178 810

## Beschreibung

Die Erfindung betrifft ein Flurförderzeug mit einer Maulkupplung, die einen Kupplungskörper und einen Kupplungsbolzen umfasst. Ferner betrifft die Erfindung ein System aus einem solchen Flurförderzeug und einem Anhänger mit einer Deichsel mit einem Kupplungsauge. Die Erfindung betrifft ferner ein Verfahren zum Ankuppeln eines Anhängers an ein Flurförderzeug, wobei das Flurförderzeug mit einer Maulkupplung ausgerüstet ist, die einen Kupplungskörper und einen Kupplungsbolzen umfasst.

Zur Materialversorgung in Industriebetrieben kommen in vielen Fällen Routenzüge zum Einsatz. Routenzüge sind regelmäßig nicht fest zusammengestellt. Ein Schleppfahrzeug, bei dem es sich ganz allgemein um ein Flurförderzeug handelt, kuppelt je nach Auftrag an einen Anhängerverbund an und transportiert diesen zum Zielort. Dort muss das Schleppfahrzeug vom Anhängerverband wieder abgekuppelt werden. Der Ankuppel- und Abkuppelvorgang erfolgt in vielen Fällen per Hand, was die vollständige Automatisierung des Betriebs der Routenzüge verhindert.

Ein System, welches den Fahrer eines Kraftfahrzeugs beim Ankuppeln eines Anhängers unterstützt, ist beispielsweise aus der DE 10 2010 004 920 A1 bekannt. Bei der aus diesem Dokument bekannten Vorrichtung wird der Ankuppelvorgang eines Anhängers an das Kraftfahrzeug, beispielsweise einen PKW, dadurch erleichtert, dass Sensoren der Einparkhilfe des PKWs verwendet werden, um eine Relativposition der Kupplung des Anhängers im Bezug zu der Position der Anhängerkupplung des Kraftfahrzeugs zu bestimmen. Es werden zu diesem Zweck die Messdaten der vielfach bei KFZs vorhandenen Einparkhilfe ausgewertet. Hierbei handelt es sich beispielsweise um die typischerweise in der Stoßstange des KFZs vorhandenen Ultraschallsensoren und die Rückfahrkamera, die im Heck des KFZs angeordnet ist. Der An- und Abkuppelvorgang selbst, muss jedoch nach wie vor durch den Benutzer erfolgen.

Aus der DE 10 2007 046 677 A1 ist ein Verfahren und eine Vorrichtung zum Ankuppeln eines Anhängers an eine landwirtschaftliche Arbeitsmaschine bekannt. Ein an der Arbeitsmaschine angeordnetes Detektionssystem umfasst wenigstens einen Sensor, der einen Ortungsstrahl in Richtung des Anhängers, genauer in Richtung von dessen Deichsel, aussendet. An dieser ist ein Reflektor positioniert, der den Ortungsstrahl reflektiert. Für den Einsatz eines solchen Systems ist es jedoch zwingend erforderlich, dass die Deichsel des Anhängers mit einem entsprechenden Reflektor ausgestattet wird. Dieses Erfordernis führt jedoch zu umfangreichen Nachrüstarbeiten, welche vor allem bei einer großen Anzahl von Anhängern unwirtschaftlich sein kann.

DE 199 31 746 A1 zeigt eine Anhängerkupplung mit einem Kupplungsmaul, einem darin verschiebbar gelagerten Kupplungsbolzen und einer Einrichtung zum Verschieben des Kupplungsbolzens in eine Verriegelungsstellung und eine Entriegelungsstellung.

Aus EP 3 511 289 A1 ist ein Verfahren sowie ein System zur Steuerung eines Flurförderzeugs bekannt. Ein durch das Flurförderzeug überwachtes Schutzfeld wird auf Grundlage einer bevorstehenden Fahrsituation eingestellt, noch bevor das Flurförderzeug die Fahrsituation erreicht.

WO 2018/228944 A1 offenbart eine automatische Deichselverriegelungskupplung zum Koppeln von zwei Fahrzeugen.

Aus DE 100 11 442 A1 ist ein Gabelstapler mit einem Anhängerbolzen bekannt, bei dem eine einen Bereich des Anhängerbolzens erfassende Kamera vorgesehen ist, die an einen Monitor angeschlossen ist.

Es ist eine Aufgabe der Erfindung, ein Flurförderzeug mit einer Maulkupplung, ein System, bestehend aus einem solchen Flurförderzeug und einem Anhänger mit einer Deichsel und einem Kupplungsauge, sowie ein Verfahren zum Ankuppeln eines solchen Anhängers an ein solches Flurförderzeug anzugeben, wobei ein vollautomatischer An- und Abkuppelvorgang ermöglicht sein soll.

Die Aufgabe wird gelöst durch ein Flurförderzeug mit einer Maulkupplung, die einen Kupplungskörper und einen Kupplungsbolzen umfasst, wobei dieses Flurförderzeug fortgebildet ist durch eine Steuereinheit, zumindest einen Verriegelungssensor und einen Verriegelungsaktor, welche kommunikationstechnisch miteinander gekoppelt sind, wobei der Verriegelungssensor dazu eingerichtet ist, zu erkennen, ob sich ein Kupplungsauge einer Deichsel eines Anhängers in oder nahe einer Verriegelungsposition innerhalb des Kupplungskörpers befindet, wobei in der Verriegelungsposition die Öffnung des Kupplungsauges mit dem Kupplungsbolzen fluchtet, so dass zum Ankuppeln des Anhängers der Kupplungsbolzen durch das Kupplungsauge geschoben werden kann, und wobei die Steuereinheit dazu eingerichtet ist, Signale des Verriegelungssensors zu empfangen und auszuwerten, und in einem Fall, in dem der Verriegelungssensor erkennt, dass sich das Kupplungsauge in oder nahe der Verriegelungsposition befindet, die Steuereinheit dazu eingerichtet ist, den Verriegelungsaktor derart anzusteuern, dass dieser den Kupplungsbolzen derart betätigt, dass der Kupplungsbolzen durch das Kupplungsauge geschoben wird, wobei das Flurförderzeug einen Annäherungssensor umfasst, welcher dazu eingerichtet ist, die Gegenwart des Kupplungsauges in einem Sensorbereich zu detektieren, wobei der Annäherungssensor kommunikationstechnisch mit der Steuereinheit gekoppelt ist und die Steuereinheit dazu eingerichtet ist, Signale des Annäherungssensors zu empfangen und auszuwerten, und in einem Fall, in dem der Annäherungssensor erkennt, dass sich das Kupplungsauge in einem Sensorbereich befindet, einen Fahrantrieb des Flurförderzeugs derart anzusteuern, dass eine Fahrgeschwindigkeit des Flurförderzeugs einen Grenzwert für eine vorgesehene Annäherungsgeschwindigkeit nicht überschreitet.

Vorteilhaft ist mit einem solchen Flurförderzeug ein vollautomatischer Ankuppelvorgang möglich. Der Ankuppelvorgang ist zudem elektronisch regelbar, was weitere Möglichkeiten im Hinblick auf die Automatisierung des Flurförderzeugs ermöglicht.

Das Flurförderzeug ist vorteilhaft dadurch fortgebildet, dass der Verriegelungssensor ein berührungsloser Sensor, insbesondere ein optischer Sensor, ist.

Der Verriegelungssensor ist beispielsweise so angeordnet, dass ein Lichtstrahl parallel zu einer Hinterwand oder einem Grund des Kupplungskörpers geführt ist. Wird dieser unterbrochen, so deutet dies darauf hin, dass sich ein äußerstes Ende des Kupplungsauges an oder nahe der Hinterwand des Kupplungskörpers befindet. In dieser Position fluchtet das Kupplungsauge mit dem Kupplungsbolzen und dieser kann durch das Kupplungsauge geschoben werden. Selbstverständlich sind abweichende Anordnungen oder Ausführungen des Verriegelungssensors denkbar, beispielsweise ein Näherungssensor, welcher die Gegenwart des Kupplungsauges erkennt. Es kann also alternativ oder zusätzlich zu dem optischen Sensor beispielsweise ein kapazitiver oder induktiver Sensor oder auch ein anderer geeigneter Sensor vorgesehen sein.

Gemäß einer weiteren vorteilhaften Ausführungsform ist das Flurförderzeug weitergebildet durch eine Höhenausgleichsrampe, welche sich zwischen einem bodennahen ersten Bereich und einem zweiten Bereich nahe eines Abschnitts des Kupplungskörpers, der einen unteren Teil des Kupplungsmauls bildet, erstreckt, wobei sich die Höhenausgleichsrampe in einer von dem Flurförderzeug weg weisenden Richtung erstreckt, in welche sich die Maulkupplung öffnet, und wobei die Höhenausgleichsrampe dazu eingerichtet ist, das Kupplungsauge der Deichsel des Anhängers aufzunehmen und bis auf eine Ankuppelhöhe zu führen, in welcher das Kupplungsauge von der Maulkupplung aufnehmbar ist.

Die Höhenausgleichsrampe ist insbesondere so ausgestaltet, dass zwischen einem Untergrund, auf dem das Flurförderzeug fährt, und einem äußersten Ende der Höhenausgleichsrampe noch ein Spalt vorhanden ist, welcher im vorgesehenen Einsatzbereich eine problemlose Verfahrbarkeit des Flurförderzeugs sicherstellt. Der erste Bereich ist also insbesondere bodennah, steht jedoch im Normalbetrieb des Flurförderzeugs nicht mit dem Untergrund in Kontakt.

Vorteilhaft kann mit der Höhenausgleichsrampe die Deichsel eines Anhängers aufgenommen werden, ohne dass hierzu die Deichsel oder der Anhänger aufwendig vorbereitet oder umgebaut werden müssen. Es können Anhänger angekuppelt werden, deren Deichseln sich, sei es bauart- oder verschleißbedingt, auf unterschiedlichen Höhen befinden. Dies erweitert die Einsatzmöglichkeiten des Flurförderzeugs erheblich und vermeidet unnötige Investitionen in den Fuhrpark auf Seiten der Anhänger.

Das Flurförderzeug ist insbesondere ferner mit einem Einführtrichter ausgestattet, welcher eine Öffnung des Kupplungskörpers in einer Richtung, in der sich der Kupplungskörper öffnet, erweitert bzw. verlängert. Ein solcher Einführtrichter, welcher die Form eines Mantels eines Stumpfes einer vierseitigen Pyramide aufweisen kann, führt das Kupplungsauge in Richtung des Kupplungsmauls. Es ist kein derart exaktes Anfahren des Kupplungsauges erforderlich, wie es stattfinden müsste, wenn das Kupplungsauge exakt in das Maul des Kupplungskörpers eingeführt werden müsste. So kann die Annäherung des Flurförderzeugs an den Anhänger mit größerer Fehlertoleranz erfolgen, was die Umschlagleistung des Flurförderzeugs erhöht. Ist das Flurförderzeug mit einem solchen Einführtrichter versehen, so wird ein unterer Abschnitt des Einführtrichters, über den das Kupplungsauge in Richtung des Kupplungskörpers beim Ankuppelvorgang hinweggleitet, als Teil der Höhenausgleichsrampe angesehen.

Das Flurförderzeug ist ferner fortgebildet durch einen Annäherungssensor, welcher dazu eingerichtet ist, die Gegenwart des Kupplungsauges in einem Sensorbereich zu detektieren, wobei der Annäherungssensor kommunikationstechnisch mit der Steuereinheit gekoppelt ist und die Steuereinheit dazu eingerichtet ist, Signale des Annäherungssensors zu empfangen und auszuwerten, und in einem Fall, in dem der Annäherungssensor erkennt, dass sich das Kupplungsauge in einem Sensorbereich befindet, einen Fahrantrieb des Flurförderzeugs derart anzusteuern, dass eine Fahrgeschwindigkeit des Flurförderzeugs einen Grenzwert für eine vorgesehene Annäherungsgeschwindigkeit nicht überschreitet. Insbesondere ist vorgesehen, dass der Sensorbereich in einem Abschnitt der Höhenausgleichsrampe vorhanden ist. Der Sensorbereich ist jedoch gemäß der genannten Ausführungsform ebenso vorgesehen, wenn das Flurförderzeug nicht mit einer Höhenausgleichsrampe versehen ist. In einem solchen Fall ist der Sensorbereich in einem Bereich vorgesehen, welcher sich hinter dem Heck des Flurförderzeugs erstreckt.

Der Sensorbereich befindet sich beispielsweise in etwa mittig zwischen dem ersten und dem zweiten Bereich auf der Höhenausgleichsrampe. Erst, wenn sich das Kupplungsauge in diesem Bereich befindet, wird die Verfahrgeschwindigkeit des Flurförderzeugs verringert. Es ist ferner insbesondere vorgesehen und vorteilhaft, wenn die Annäherung des Flurförderzeugs mit einer Geschwindigkeit erfolgt, welche maximal zulässig ist, ohne dass Schutzfelder eingesetzt werden müssen. Beispielsweise erfolgt die Annäherung des Flurförderzeugs an den Anhänger mit einer Geschwindigkeit von mindestens 0,25 m/s, insbesondere mit einer Geschwindigkeit von zumindest näherungsweise 0,3 m/s. Diese vergleichsweise hohe Annäherungsgeschwindigkeit wird genutzt, um die kinetische Energie der Deichsel auszunutzen, so dass sich die Deichsel die Höhenausgleichsrampe hoch bewegt, und zwar ohne den Anhänger zu verschieben. Würde eine Annäherung mit sehr geringer Geschwindigkeit erfolgen, würde das Flurförderzeug einen leichten, beispielsweise leeren, Anhänger lediglich wegschieben. Es wäre jedoch nicht möglich, die Deichsel des Anhängers über die Höhenausgleichsrampe in Richtung der Verriegelungsposition zu bewegen. Es wird also die Masseträgheit des Anhängers genutzt, um die Deichsel in die gewünschte Position zu bringen. Hierzu ist es vorteilhaft, wenn die Annäherungsgeschwindigkeit erst reduziert wird, wenn sich das Kupplungsauge bereits in etwa in der Mitte der Rampe befindet.

Gemäß einer weiteren vorteilhaften Ausführungsform ist das Flurförderzeug fortgebildet durch einen Personenschutzsensor, welcher zur Überwachung eines Personenschutz-Sicherheitsbereichs eingerichtet ist, wobei sich der Personenschutz-Sicherheitsbereich ausgehend von einer Rückwand des Flurförderzeugs in einer von dem Flurförderzeug weg weisenden Richtung erstreckt, in welche sich die Maulkupplung öffnet, wobei der Personenschutzsensor kommunikationstechnisch mit der Steuereinheit gekoppelt ist und die Steuereinheit dazu eingerichtet ist, Signale des Personenschutzsensors zu empfangen und auszuwerten, und in einem Fall, in dem der Personenschutzsensor erkennt, dass sich eine Person in dem Personenschutz-Sicherheitsbereich befindet, den Verriegelungsaktor derart anzusteuern, dass der Kupplungsbolzen nicht betätigt wird, so lange sich die Person in dem Personenschutz-Sicherheitsbereich befindet.

Der Personenschutzsensor verhindert vorteilhaft, dass sich eine Person an der Maulkupplung verletzt. Sollte eine Person entgegen der ausdrücklichen Betriebsanweisung missbräuchlich in den Bereich des Kupplungskörpers hineinfassen, könnte sie unter Umständen den Verriegelungssensor auslösen. In diesem Moment befindet sich die Person jedoch in dem Personenschutz-Sicherheitsbereich. Folglich wird der Kupplungsbolzen nicht betätigt und eine Gefahr ist ausgeschlossen. Weist das Flurförderzeug eine Höhenausgleichsrampe auf, so erstreckt sich der Personenschutz-Sicherheitsbereich zwischen dem Untergrund, auf welchem das Flurförderzeug abrollt, und einem unteren Ende der Höhenausgleichsrampe.

Gemäß einer weiteren vorteilhaften Ausführungsform ist das Flurförderzeug fortgebildet durch zumindest einen Umfeldüberwachungssensor, welcher dazu eingerichtet ist, in einer Umgebung des Flurförderzeugs ein zusätzliches Schutzfeld aufzuspannen, wobei die Steuereinheit dazu eingerichtet ist, festzustellen, ob sich der Kupplungsbolzen in einer geöffneten oder in einer geschlossenen Stellung befindet, und wobei die Steuereinheit dazu eingerichtet ist, eine Position, Form, Ausdehnung und/oder Fläche des zusätzlichen Schutzfelds in Abhängigkeit der Stellung des Kupplungsbolzens zu verändern. Der Umfeldüberwachungssensor ist beispielsweise ein separater zusätzlich am Flurförderzeug angebrachter Überwachungssensor. Es ist jedoch ebenso vorgesehen, für das zusätzliche Schutzfeld die am Flurförderzeug vorhandenen Sensoren zu nutzen. Mit anderen Worten, werden im Kontext der vorliegenden Beschreibung also auch solche bereits am Flurförderzeug vorhandenen Sensoren als Umfeldüberwachungssensoren angesehen, sofern sie entsprechend genutzt werden. Es ist ebenso vorgesehen, das zusätzliche Schutzfeld nicht nur in Position, Form, Ausdehnung und/oder Fläche zu verändern, sondern beispielsweise auch weitere zusätzliche Schutzfelder zu definieren. Auch hierzu können wiederum die am Flurförderzeug vorhandenen Sensoren eingesetzt werden. Das Schutzfeld wird als zusätzliches Schutzfeld bezeichnet, da Flurförderzeuge im autonomen Betrieb, wie allgemein üblich und bekannt, ein oder mehrere Schutzfelder verwenden, um Kollisionen zu vermeiden. Das zusätzliche Schutzfeld ergänzt diese im autonomen Betrieb vorgesehenen und vorhandenen Schutzfelder.

Gemäß einem Ausführungsbeispiel ist vorgesehen, dass die Steuereinheit dazu eingerichtet ist, in geschlossener Stellung des Kupplungsbolzens das von dem zumindest einen Umfeldüberwachungssensor aufgespannte zusätzliche Schutzfeld auf einen Bereich zu erweitern, welcher sich ausgehend von der Maulkupplung in einer von dem Flurförderzeug weg weisenden Richtung erstreckt, in welche sich die Maulkupplung öffnet, und zumindest bis zu einer vorgegebenen Entfernung erstreckt, welche insbesondere zumindest näherungsweise einer Deichsellänge eines Anhängers entspricht.

Das zusätzliche Schutzfeld wird in einem solchen Fall, in dem der Anhänger an das Flurförderzeug angehängt ist, auf den Bereich zwischen dem Flurförderzeug und dem Anhänger erweitert. So ist dieser Bereich mit abgesichert. Die Frage, ob dieser zusätzliche Überwachungsbereich, also ein erweitertes zusätzliches Schutzfeld, aktiviert wird oder nicht, wird von der tatsächlichen Stellung der Kupplung abhängig gemacht. Wenn die Kupplung geöffnet ist und somit kein Anhänger an dem Flurförderzeug angehängt sein kann, wird die Umfeldüberwachung auf die minimale Größe zurückgefahren. So werden unnötige Verletzungen der Sicherheitsbereiche, die stets einen Stopp des Flurförderzeugs zur Folge haben, vermieden und die Umschlagleistung des Flurförderzeugs erhöht.

Gemäß einem weiteren Ausführungsbeispiel ist vorgesehen, dass die Steuereinheit dazu eingerichtet ist, das zusätzliche Schutzfeld in einer Fläche, in welcher die Maulkupplung vorhanden ist, nur dann zu aktivieren, wenn für die Steuereinheit feststellbar ist, dass der Kupplungsbolzen sich in geöffneter Stellung befindet und das Flurförderzeug stillsteht oder rückwärtsfährt. Auch dieses von dem zumindest einen Umfeldüberwachungssensor aufgespannte zusätzliche Schutzfeld erstreckt sich ausgehend von der Maulkupplung in einer von dem Flurförderzeug weg weisenden Richtung, in welche sich die Maulkupplung öffnet, und zwar zumindest bis zu einer vorgegebenen Entfernung, welche insbesondere zumindest näherungsweise einer Deichsellänge eines Anhängers entspricht.

Gemäß einem weiteren vorteilhaften Ausführungsbeispiel ist die Steuereinheit dazu eingerichtet, die Bestimmung einer Position, Form, Ausdehnung und/oder Fläche des zusätzlichen Schutzfelds nicht nur in Abhängigkeit der Stellung des Kupplungsbolzens, sondern auch in Abhängigkeit eines Lenkeinschlags des Flurförderzeugs, zu verändern. In diesem Zusammenhang ist insbesondere vorgesehen, dass bei einem Lenkeinschlag nach rechts, welcher einen vorgegebenen Grenzwert überschreitet, dass zusätzliche Schutzfeld auf der rechten Seite des Flurförderzeugs erweitert wird. In analoger Weise ist ferner insbesondere vorgesehen, dass bei einem Lenkeinschlag nach links, welcher einen vorgegebenen weiteren Grenzwert überschreitet, das zusätzliche Schutzfeld auf der linken Seite des Flurförderzeugs erweitert wird. Es ist allgemein bekannt, dass Anhänger bei Kurvenfahrt auf einem weiter innen liegenden Radius als das Zugfahrzeug laufen. Um diesem Effekt im Hinblick auf die Gestaltung von Form und Größe des zusätzlichen Schutzfelds gerecht zu werden, können die genannten Anpassungen des zusätzlichen Schutzfelds vorgenommen werden. Es ist ebenso vorgesehen, dass die Steuereinheit dazu eingerichtet ist, weitere zusätzliche Schutzfelder zu definieren. Die Erweiterung der zusätzlichen Schutzfelder und die Neudefinition weiterer zusätzlicher Schutzfelder erfolgt beispielsweise, indem weitere am Flurförderzeug angeordnete Sensoren genutzt werden.

Vorteilhaft wird gemäß der oben genannten Ausführungsformen ein Flurförderzeug, welches als Zugfahrzeug einsetzbar ist, bereitgestellt, welches einerseits autonom betreibbar ist, und welches andererseits ein äußerst hohes Sicherheitsniveau bietet.

Gemäß einer weiteren vorteilhaften Ausführungsform ist das Flurförderzeug dadurch fortgebildet, dass die Steuereinheit dazu eingerichtet ist, festzustellen, dass der Verriegelungsaktor den Kupplungsbolzen durch das Kupplungsauge geschoben hat und anschließend ein Fahrantrieb das Flurförderzeug in Bewegung versetzt hat, wobei die Steuereinheit ferner dazu eingerichtet ist, nachdem der Fahrantrieb das Flurförderzeug in Bewegung versetzt hat, für zumindest eine vorgegebene Zeitspanne Signale des Verriegelungssensors zu empfangen und auszuwerten, und in einem Fall, in dem eine Auswertung der Signale ergibt, dass sich das Kupplungsauge nicht in der Verriegelungsposition befindet, den Fahrantrieb des Flurförderzeugs zu stoppen.

Vorteilhaft wird sichergestellt, dass beim Anfahren des Flurförderzeugs der Anhänger auch tatsächlich angehängt und in der Maulkupplung verriegelt ist. Sollte aus irgendeinem Grund der Kupplungsvorgang nicht erfolgreich erfolgt sein, stoppt das Flurförderzeug automatisch. Es kann eine entsprechende Warnmitteilung ausgegeben werden, so dass der Kupplungsvorgang manuell nachgeholt und/oder der gegebenenfalls vorliegende Fehler behoben werden kann.

Das Flurförderzeug ist ferner insbesondere fortgebildet durch ein Betätigungselement, welches dazu eingerichtet ist, den Verriegelungsaktor derart manuell anzusteuern, dass dieser den Kupplungsbolzen derart betätigt, dass der Kupplungsbolzen durch das Kupplungsauge geschoben wird. Die Möglichkeit einer manuellen Betätigung erleichtert den zuvor beschriebenen, ggf. manuell zu wiederholenden Kupplungsvorgang.

Gemäß einer weiteren vorteilhaften Ausführungsform ist das Flurförderzeug ein fahrerloses Transportfahrzeug. Für fahrerlose Transportfahrzeuge ist ein vollautomatischer An- und Abkuppelvorgang besonders vorteilhaft.

Die Aufgabe wird ferner gelöst durch ein System aus einem Flurförderzeug nach einem oder mehreren der zuvor genannt Ausführungsformen und einem Anhänger mit einer Deichsel mit einem Kupplungsauge. Auf das System treffen gleiche oder ähnliche Vorteile zu, wie sie bereits im Hinblick auf das Flurförderzeug selbst erwähnt wurden, so dass auf Wiederholungen verzichtet werden soll.

Die Aufgabe wird ferner gelöst durch ein Verfahren zum Ankuppeln eines Anhängers an ein Flurförderzeug, wobei das Flurförderzeug mit einer Maulkupplung ausgerüstet ist, die einen Kupplungskörper und einen Kupplungsbolzen umfasst, wobei das Verfahren dadurch fortgebildet ist, dass das Flurförderzeug eine Steuereinheit, zumindest einen Verriegelungssensor und einen Verriegelungsaktor, welche kommunikationstechnisch miteinander gekoppelt sind, umfasst, wobei ein Verriegelungssensor erkennt, ob sich ein Kupplungsauge einer Deichsel eines Anhängers in oder nahe einer Verriegelungsposition innerhalb des Kupplungskörpers befindet, wobei in der Verriegelungsposition die Öffnung des Kupplungsauges mit dem Kupplungsbolzen fluchtet, so dass zum Ankuppeln des Anhängers der Kupplungsbolzen durch das Kupplungsauge geschoben werden kann, die Steuereinheit Signale des Verriegelungssensors empfängt und auswertet, und in einem Fall, in dem der Verriegelungssensor erkennt, dass sich das Kupplungsauge in oder nahe der Verriegelungsposition befindet, die Steuereinheit den Verriegelungsaktor derart ansteuert, dass dieser den Kupplungsbolzen betätigt und der Kupplungsbolzen durch das Kupplungsauge geschoben wird, wobei das Flurförderzeug ferner einen Annäherungssensor umfasst, welcher die Gegenwart des Kupplungsauges in einem Sensorbereich detektiert und der kommunikationstechnisch mit der Steuereinheit gekoppelt ist, wobei die Steuereinheit Signale des Annäherungssensors empfängt und auswertet, und in einem Fall, in dem der Annäherungssensor erkennt, dass sich das Kupplungsauge in einem Sensorbereich befindet, einen Fahrantrieb des Flurförderzeugs derart ansteuert, dass eine Fahrgeschwindigkeit des Flurförderzeugs einen Grenzwert für eine vorgesehene Annäherungsgeschwindigkeit nicht überschreitet.

Auch auf das Verfahren treffen gleiche oder ähnliche Vorteile zu, wie sie bereits im Hinblick auf das Flurförderzeug erwähnt wurden. Auf Wiederholungen soll verzichtet werden.

Vorteilhaft ist das Verfahren dadurch fortgebildet, dass der Verriegelungssensor berührungslos, insbesondere optisch, erkennt, ob sich das Kupplungsauge der Deichsel des Anhängers in oder nahe der Verriegelungsposition befindet.

Ferner ist das Verfahren vorteilhaft dadurch fortgebildet, dass das Flurförderzeug eine Höhenausgleichsrampe umfasst, welche sich zwischen einem bodennahen ersten Bereich und einem zweiten Bereich nahe eines Abschnitts des Kupplungskörpers, der einen unteren Teil des Kupplungsmauls bildet, erstreckt, wobei sich die Höhenausgleichsrampe in einer von dem Flurförderzeug weg weisenden Richtung erstreckt, in welche sich die Maulkupplung öffnet und wobei die Höhenausgleichsrampe dazu eingerichtet ist, das Kupplungsauge der Deichsel des Anhängers aufzunehmen und bis auf eine Ankuppelhöhe zu führen, in welcher das Kupplungsauge von der Maulkupplung aufnehmbar ist.

Das Verfahren ist dadurch fortgebildet, dass das Flurförderzeug ferner einen Annäherungssensor umfasst, welcher die Gegenwart des Kupplungsauges in einem Sensorbereich detektiert und der kommunikationstechnisch mit der Steuereinheit gekoppelt ist, wobei die Steuereinheit Signale des Annäherungssensors empfängt und auswertet, und in einem Fall, in dem der Annäherungssensor erkennt, dass sich das Kupplungsauge in einem Sensorbereich befindet, einen Fahrantrieb des Flurförderzeugs derart ansteuert, dass eine Fahrgeschwindigkeit des Flurförderzeugs einen Grenzwert für eine vorgesehene Annäherungsgeschwindigkeit nicht überschreitet. Es ist insbesondere vorgesehen, dass sich der Sensorbereich in einem Abschnitt der Höhenausgleichsrampe erstreckt. Es wird mit anderen Worten also insbesondere detektiert, ob sich das Kupplungsauge in einem entsprechenden Abschnitt der Höhenausgleichsrampe befindet.

Das Verfahren ist gemäß einer weiteren vorteilhaften Ausführungsform dadurch fortgebildet, dass das Flurförderzeug einen Personenschutzsensor umfasst, welcher einen Personenschutz-Sicherheitsbereich überwacht, wobei sich der Personenschutz-Sicherheitsbereich ausgehend von einer Rückwand des Flurförderzeugs in einer von dem Flurförderzeug weg weisenden Richtung erstreckt, in welche sich die Maulkupplung öffnet, wobei der Personenschutzsensor kommunikationstechnisch mit der Steuereinheit gekoppelt ist und die Steuereinheit Signale des Personenschutzsensors empfängt und auswertet, und in einem Fall, in dem der Personenschutzsensor erkennt, dass sich eine Person in dem Personenschutz-Sicherheitsbereich befindet, der Verriegelungsaktor derart angesteuert wird, dass der Kupplungsbolzen nicht betätigt wird, solange sich die Person in dem Personenschutz-Sicherheitsbereich befindet.

Gemäß einer weiteren vorteilhaften Ausführungsform ist das Verfahren dadurch fortgebildet, dass das Flurförderzeug einen Umfeldüberwachungssensor umfasst, welcher in einer Umgebung des Flurförderzeugs ein zusätzliches Schutzfeld aufspannt, wobei die Steuereinheit feststellt, ob sich der Kupplungsbolzen in einer geöffneten oder in einer geschlossenen Stellung befindet, und wobei die Steuereinheit eine Position, Form, Ausdehnung und/oder Fläche des zusätzlichen Schutzfelds in Abhängigkeit der Stellung des Kupplungsbolzens verändert.

Gemäß einem weiteren Ausführungsbeispiel ist vorgesehen, dass in einem Fall, in dem die Steuereinheit feststellt, dass sich der Kupplungsbolzen in der geschlossenen Stellung befindet, das von dem zumindest einen Umfeldüberwachungssensor aufgespannte zusätzliche Schutzfeld auf einen Bereich erweitert wird, welcher sich ausgehend von der Maulkupplung in einer von dem Flurförderzeug weg weisenden Richtung erstreckt, in welche sich die Maulkupplung öffnet, und sich zumindest bis zu einer vorgegebenen Entfernung erstreckt, welche insbesondere zumindest näherungsweise einer Deichsellänge eines Anhängers entspricht.

Gemäß einem weiteren Ausführungsbeispiel ist vorgesehen, dass die Steuereinheit das zusätzliche Schutzfeld in einer Fläche, in welcher die Maulkupplung vorhanden ist, nur aktiviert, wenn für die Steuereinheit feststellbar ist, dass der Kupplungsbolzen sich in geöffneter Stellung befindet und das Flurförderzeug stillsteht oder rückwärtsfährt. Auch dieses von dem zumindest einen Umfeldüberwachungssensor aufgespannte zusätzliche Schutzfeld erstreckt sich ausgehend von der Maulkupplung in einer von dem Flurförderzeug weg weisenden Richtung, in welche sich die Maulkupplung öffnet, und zwar zumindest bis zu einer vorgegebenen Entfernung, welche insbesondere zumindest näherungsweise einer Deichsellänge eines Anhängers entspricht.

Gemäß einem weiteren vorteilhaften Ausführungsbeispiel wird die Steuereinheit die Position, Form, Ausdehnung und/oder Fläche des zusätzlichen Schutzfelds nicht nur in Abhängigkeit der Stellung des Kupplungsbolzens, sondern auch in Abhängigkeit eines Lenkeinschlags des Flurförderzeugs verändern. In diesem Zusammenhang ist insbesondere vorgesehen, dass bei einem Lenkeinschlag nach rechts, welcher einen vorgegebenen Grenzwert überschreitet, das zusätzliche Schutzfeld auf der rechten Seite des Flurförderzeugs erweitert wird. In analoger Weise ist ferner insbesondere vorgesehen, dass bei einem Lenkeinschlag nach links, welcher einen vorgegebenen weiteren Grenzwert überschreitet, das zusätzliche Schutzfeld auf der linken Seite des Flurförderzeugs erweitert wird. Es ist ebenso vorgesehen, dass weitere zusätzliche Schutzfelder definiert werden. Die Erweiterung der zusätzlichen Schutzfelder und/oder die Neudefinition weiterer zusätzlicher Schutzfelder erfolgt beispielsweise, indem die weiteren am Flurförderzeug angeordneten Sensoren genutzt werden.

Das Verfahren ist schließlich ferner insbesondere dadurch fortgebildet, dass die Steuereinheit feststellt, dass der Verriegelungsaktor den Kupplungsbolzen durch das Kupplungsauge geschoben hat und anschließend ein Fahrantrieb das Flurförderzeug in Bewegung versetzt hat, wobei die Steuereinheit ferner, nachdem der Fahrantrieb das Flurförderzeug in Bewegung versetzt hat, für zumindest eine vorgegebene Zeitspanne Signale des Verriegelungssensors empfängt und auswertet, und in einem Fall, in dem eine Auswertung der Signale ergibt, dass sich das Kupplungsauge nicht in der Verriegelungsposition befindet, den Fahrantrieb des Flurförderzeugs stoppt.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematisch vereinfachte Perspektivansicht eines Details eines Flurförderzeugs im Bereich einer beispielhaft am Heck des Flurförderzeugs angebrachten Maulkupplung,
- Fig. 2: eine schematisch vereinfachte Perspektivansicht eines Heckabschnitts des Flurförderzeugs, in dem beispielhaft die Maulkupplung angebracht ist,
- Fig. 3: eine schematisch vereinfachte Perspektivansicht eines Flurförderzeugs mit einer Maulkupplung,
- Fig. 4: eine schematisch vereinfachte Draufsicht auf ein bereichsweise dargestelltes Flurförderzeug und einen bereichsweise dargestellten Anhänger,
- Fig. 5: eine schematisch vereinfachte Draufsicht auf ein Flurförderzeug mit verschiedenen Schutzbereichen und
- Fig. 6: eine schematisch vereinfachte Draufsicht auf ein Flurförderzeug mit mehreren Anhängern während einer Kurvenfahrt.

In den Zeichnungen sind jeweils gleiche oder gleichartige Elemente und/oder Teile mit denselben Bezugsziffern versehen, so dass von einer erneuten Vorstellung jeweils abgesehen wird.

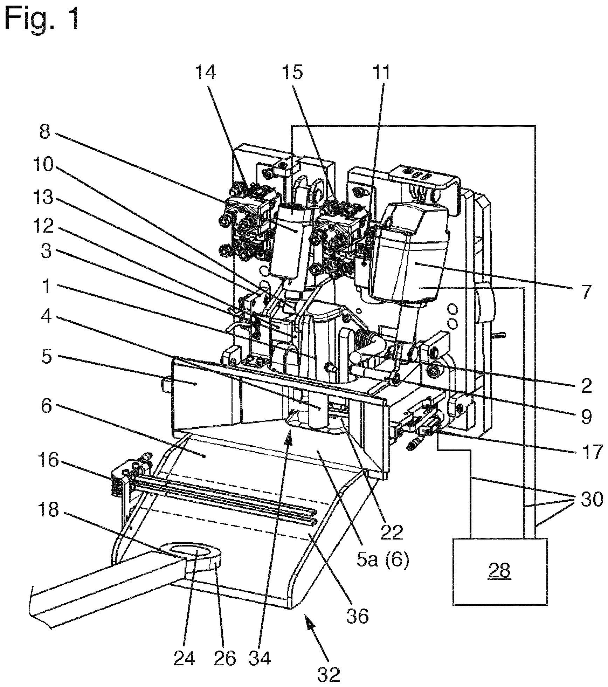

Fig. 1 zeigt in einer schematisch vereinfachten Perspektivansicht ein Detail einer Rückwand eines Flurförderzeugs 21, an dem eine Maulkupplung 1 befestigt ist. Die Maulkupplung 1 umfasst einen Kupplungskörper 22, von dem in Fig. 1 lediglich ein unterer Schenkel sichtbar ist. Durch den Kupplungskörper 22 hindurch erstreckt sich ein Kupplungsbolzen 4, welcher sich im angekuppelten Zustand durch eine Öffnung 24 eines Kupplungsauges 26 einer Deichsel 18 eines in Fig. 1 nicht vollständig dargestellten Anhängers erstreckt. Ferner umfasst ist ein Verriegelungssensor 17, bei dem es sich beispielhaft um einen optischen Sensor handelt. Der Verriegelungssensor 17 ist dazu eingerichtet, zu erkennen, ob sich das Kupplungsauge 26 der Deichsel 18 in oder nahe einer Verriegelungsposition innerhalb des Kupplungskörpers 22 befindet. Das Kupplungsauge 26 befindet sich in der Verriegelungsposition, wenn die Öffnung 24 des Kupplungsauges 26 mit dem Kupplungsbolzen 4 fluchtet, so dass zum Ankuppeln des Anhängers der Kupplungsbolzen 4 durch das Kupplungsauge 26 geschoben werden kann. Ein Ankuppelvorgang kann auch erfolgreich stattfinden, wenn sich das Kupplungsauge 26 noch nicht exakt in der Verriegelungsposition, sondern in unmittelbarer Nähe davor befindet. Der Verriegelungssensor 17 kann gemäß einer solchen Ausführungsform den Kupplungsbolzen 4 bereits auslösen, kurz bevor das Kupplungsauge 26 die Verriegelungsposition erreicht hat. Der Kupplungsbolzen 4 schlägt auf den Deichselkopf auf und bei weiterem Zurückfahren des Flurförderzeugs 21 rutscht der Kupplungsbolzen 4 in das Kupplungssauge 26 hinein.

Das Flurförderzeug 21 umfasst ferner eine Steuereinheit 28, die kommunikationstechnisch zumindest mit dem Verriegelungssensor 17 und mit einem Verriegelungsaktor 8 gekoppelt ist. Hierzu sind geeignete Datenverbindungen 30 in dem Flurförderzeug 21 vorhanden, welche in Fig. 1 lediglich schematisch dargestellt sind. Die Steuereinheit 28 ist ferner beispielsweise, abweichend von der Darstellung in Fig. 1, nicht als separate Einheit implementiert, sondern beispielsweise als Softwaremittel in der zentralen Betriebssteuereinheit des Flurförderzeugs 21 vorgesehen.

Die Steuereinheit 28 ist dazu eingerichtet, Signale des Verriegelungssensors 17 zu empfangen und auszuwerten. In einem Fall, in dem der Verriegelungssensor 17 erkennt, dass sich das Kupplungsauge 26 in oder nahe der Verriegelungsposition innerhalb des Kupplungskörpers 22 befindet, steuert die Steuereinheit 28 den Verriegelungsaktor 8 derart an, dass dieser den Kupplungsbolzen 4 betätigt und der Kupplungsbolzen 4 durch das Kupplungsauge 26 geschoben wird. So erfolgt eine automatische Ankupplung des Anhängers, sobald sich das Kupplungsauge 26 der Deichsel 18 in der geeigneten Verriegelungsposition befindet.

Die Maulkupplung 1 umfasst ferner einen Einführtrichter 5, welcher das Kupplungsauge 26 der Deichsel 18 in Richtung des Kupplungskörpers 22 und somit in Richtung der Verriegelungsposition führt. Der Einführtrichter 5 erlaubt es, die Maulkupplung 1 des Flurförderzeugs 21 und die Deichsel 18 des Anhängers mit größerer Toleranz relativ zueinander zu positionieren, was den Ankuppelvorgang beschleunigt und die Umschlagleistung des Flurförderzeugs 21 erhöht. An den Einführtrichter 5 schließt sich in einer Richtung, in welche sich die Maulkupplung 1 öffnet, eine Höhenausgleichsrampe 6 an. Die Höhenausgleichsrampe 6 erstreckt sich zwischen einem bodennahen ersten Bereich 32 und einem zweiten Bereich 34, der nahe eines Abschnitts des Kupplungskörpers 22 angeordnet ist, und der den unteren Teil des Kupplungsmauls bildet, und der in Fig. 1 sichtbar ist. Ein unterer Teil des Einführtrichters 5a, welcher sich direkt an die Höhenausgleichsrampe 6 anschließt, wird ebenfalls als Teil der Höhenausgleichsrampe 6 angesehen. Die Höhenausgleichsrampe 6 ist dazu eingerichtet, das Kupplungsauge 26 der Deichsel 18 des Anhängers aufzunehmen und bis auf eine Ankuppelhöhe zu führen, in welcher das Kupplungsauge 26 von der Maulkupplung 1 aufnehmbar ist. Die Höhenausgleichsrampe 6 erlaubt es, Anhänger mit unterschiedlichen Deichselhöhen anzukuppeln. Dies ist besonders vorteilhaft, wenn bei einem Kunden bereits viele Anhänger im Einsatz sind und eine Umrüstung dieser Anhänger auf eine einheitliche Deichselhöhe unwirtschaftlich wäre.

An der Höhenausgleichsrampe 6 ist ein Annäherungssensor 16 angebracht, welcher dazu eingerichtet ist, die Gegenwart des Kupplungsauges 26 in einem Sensorbereich 36 der Höhenausgleichsrampe 6 zu detektieren. Auch der Annäherungssensor 16 ist kommunikationstechnisch mit der Steuereinheit 28 gekoppelt. Hierzu ist eine in Fig. 1 nicht dargestellte Datenverbindungen 30 vorhanden. Die Steuereinheit 28 ist dazu eingerichtet, Signale des Annäherungssensors 16 zu empfangen und auszuwerten. In einem Fall, in dem der Annäherungssensor 16 erkennt, dass sich das Kupplungsauge 26 in dem Sensorbereich 36 der Höhenausgleichsrampe 6 befindet, ist die Steuereinheit 28 dazu eingerichtet, einen Fahrantrieb des Flurförderzeugs 21 derart anzusteuern, dass eine Fahrgeschwindigkeit des Flurförderzeugs 21 einen vorgegebenen Grenzwert für eine vorgesehene Annäherungsgeschwindigkeit nicht überschreitet. Mit anderen Worten fährt das Flurförderzeug 21 rückwärts in Richtung der Deichsel 18 des Anhängers mit einer definierten Geschwindigkeit, beispielsweise mit einer Geschwindigkeit von 0,3 m/s. Die Annäherungsgeschwindigkeit wird absichtlich relativ hoch gewählt. Sie ist so hoch gewählt, dass gerade noch keine Schutzfelder zum Betrieb des Flurförderzeugs 21 benötigt werden.

Es sollte die maximal mögliche Geschwindigkeit für einen solchen Betrieb des Flurförderzeugs 21 gewählt werden, um die kinetische Energie der Deichsel 18 zu nutzen, um das Kupplungsauge 26 die Höhenausgleichsrampe 6 hinaufzubewegen, bis in die Verriegelungsposition. Dies ist insbesondere bei leichten Anhängern wichtig, welcher eine geringe Masseträgheit haben. Würde die Annäherung an einen solchen leichten, weil beispielsweisen leeren, Anhänger mit zu geringer Geschwindigkeit erfolgen, so würde dieser lediglich von dem Flurförderzeug 21 weggeschoben, es würde sich jedoch nicht das Kupplungsauge 26 der Deichsel 18 die Höhenausgleichsrampe 6 hinaufbewegen. Erst wenn das Kupplungsauge 26 in dem Sensorbereich 36 von dem Annäherungssensor 16 detektiert wird, wird die Fahrgeschwindigkeit des Flurförderzeugs 21 merklich reduziert, möglichst so, dass ein sanfter Ankuppelvorgang stattfindet und genau in jenem Moment, in dem sich das Kupplungsauge 26 in der Verriegelungsposition befindet, das Flurförderzeug zumindest annähernd zum Stillstand kommt. Der endgültige Stopp des Flurförderzeugs 21 kann in diesem Zusammenhang auch mittels des Verriegelungssensors 17 ausgelöst werden. Mit anderen Worten wird also das Flurförderzeug 21 vollständig gestoppt, sobald sich das Kupplungsauge 26 in der Verriegelungsposition befindet.

Alternativ zu dem dargestellten Ausführungsbeispiel kann das Flurförderzeug 21 ohne Höhenausgleichsrampe 6 ausgeführt sein. In einem solchen Fall erstreckt sich der Sensorbereich 36 hinter dem Flurförderzeug 21 also in eine Richtung, in die sich die Maulkupplung öffnet, und welche von der Hinterwand des Flurförderzeugs 21 weg weist. Die Funktionalität des Sensorbereich 36 bleibt jedoch auch bei einem solchen Ausführungsbeispiel so wie sie oben beschrieben wurde.

Der Ankuppelvorgang kann zusammenfassend wie folgt beschrieben werden: Der Verriegelungssensor 17 erkennt die Gegenwart des Kupplungsauges 26 der Deichsel 18. Das entsprechende Signal des Verriegelungssensors 17 wird in der Steuereinheit 28 verarbeitet und es wird der Verriegelungsaktor 8, bei dem es sich beispielsweise um einen hydraulischen Schließzylinder handelt, angesteuert. Dies erfolgt über den Betätigungshebel 10, der mit einem Hebel 3 zum Schließen der Maulkupplung 1 zusammenwirkt. Ein Näherungssensor 12 erkennt, dass der Hebel 3 zum Schließen der Maulkupplung 1 in der geschlossenen Stellung ist und gibt ein Signal an die Steuereinheit 28, dass die Maulkupplung 1 geschlossen ist. Auch hierzu ist eine in Fig. 1 nicht dargestellte Datenverbindung 30 zwischen dem Näherungssensor 12 und der Steuereinheit 28 vorhanden. Der Verriegelungsaktor 8 fährt erneut in seine Grundstellung und der weitere Näherungssensor 13 erkennt die Grundstellung des Verriegelungsaktors 8. Der Ankuppelvorgang ist abgeschlossen.

Nach erfolgtem Ankuppelvorgang fährt das Flurförderzeug 21 mit dem Anhänger zu einem Zielpunkt oder Abkoppelpunkt. Während der ersten Sekunden der Fahrt überprüft die Steuereinheit 28, ob der Anhänger auch tatsächlich erfolgreich angekuppelt wurde, anderenfalls stoppt sie die Fahrt des Flurförderzeugs 21. Hierzu ist die Steuereinheit 28 dazu eingerichtet, festzustellen, dass der Verriegelungsaktor 8, den Kupplungsbolzen 4 auch tatsächlich durch das Kupplungsauge 26 geschoben hat. Ferner überprüft die Steuereinheit 28, ob der Fahrantrieb das Flurförderzeug 21 in Bewegung versetzt hat und überprüft anschließend für beispielsweise wenige Sekunden, nachdem der Fahrantrieb das Flurförderzeug 21 in Bewegung gesetzt hat, die Signale des Verriegelungssensors 17. In einem Fall, dass die Auswertung der Signale des Verriegelungssensors 17 ergibt, dass sich das Kupplungsauge 26 nicht in der Verriegelungsposition befindet, stoppt die Steuereinheit 28 das Flurförderzeug 21. Der Ankuppelvorgang kann dann von Hand nachgeholt werden.

Zum Abkuppeln des Anhängers wird ein Abkuppelaktor 7, bei dem es sich wiederum beispielsweise um einen hydraulischen Zylinder handelt, angesteuert. Über einen Betätigungshebel 9 tritt dieser in Wechselwirkung mit einem Hebel 2 zum Öffnen der Maulkupplung 1. Durch die Betätigung des Hebels 2 wird der Kupplungsbolzen 4 geöffnet. Wenn der Hebel 2 eine obere Position erreicht hat, wird dies durch den weiteren Näherungssensor 11 festgestellt. Anschließend fährt der Abkuppelaktor 7 wieder in seine Grundstellung, der Kupplungsbolzen 4 verbleibt in der geöffneten Stellung. Durch den weiteren Näherungssensor 12 kann erneut ein Signal an die Steuereinheit 28 gegeben werden, so dass das Flurförderzeug 21 wieder fahrbereit ist. Fährt das Flurförderzeug 21 an, rutscht die Deichsel 18 aus der Maulkupplung 1 und das Flurförderzeug 21 ist für den nächsten Transportvorgang verfügbar. Über die beiden Wendeschütze 14, 15 werden der Abkuppelaktor 7 und der Verriegelungsaktor 8 mit entsprechender Leistung versorgt.

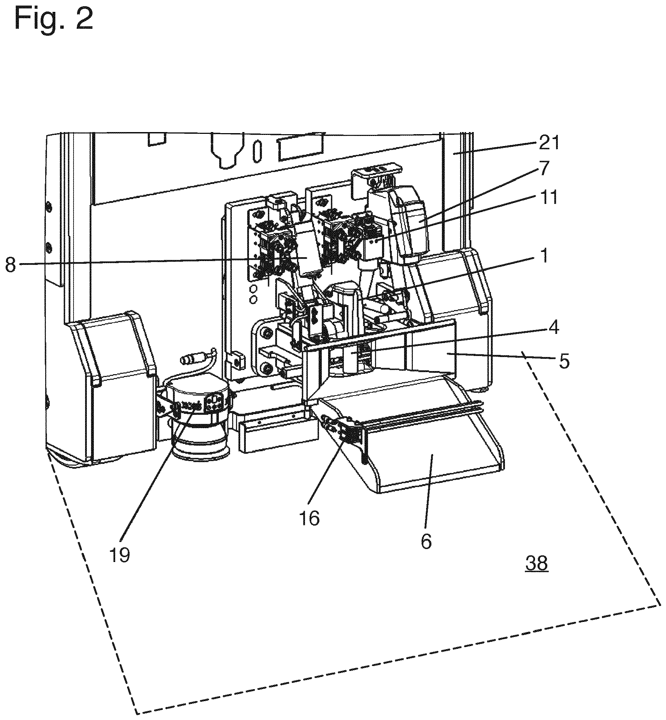

Fig. 2 zeigt in einer weiteren schematisch vereinfachten Perspektivansicht einen hinteren Bereich des Flurförderzeugs 21, an dem die Maulkupplung 1 angebracht ist. In diesem Bereich ist an dem Flurförderzeug 21 ein Personenschutzsensor 19 vorhanden, welcher zur Überwachung eines Personenschutz-Sicherheitsbereiches 38 eingerichtet ist. Der Personenschutz-Sicherheitsbereich 38 erstreckt sich ausgehend von einer Rückwand des Flurförderzeugs 21 in einer Richtung, die von dem Flurförderzeug 21 weg weist und in der sich die Maulkupplung 1 öffnet. Der Personenschutzsensor 19 ist ebenfalls kommunikationstechnisch mit der Steuereinheit 28, welche in Fig. 2 nicht dargestellt ist, gekoppelt. Auch hierzu ist wiederum eine geeignete Datenverbindung 30 vorgesehen, welche ebenfalls nicht dargestellt ist. Die Steuereinheit 28 ist dazu eingerichtet, Signale des Personenschutzsensors 19 zu empfangen und auszuwerten, und in einem Fall, in dem der Personenschutzsensor 19 erkennt, dass sich eine Person in dem Personenschutz-Sicherheitsbereich 38 befindet, den Verriegelungsaktor 8 derart anzusteuern, dass der Kupplungsbolzen 4 nicht betätigt wird, solange sich die Person in dem Personenschutz-Sicherheitsbereich 38 befindet. Diese Sicherheitsfunktion stellt sicher, dass der Verriegelungsbolzen 4 nicht versehentlich ausgelöst wird, wenn der Verriegelungssensor 17, beispielsweise durch Hineinfassen in den Kupplungskörper 22, ausgelöst wird.

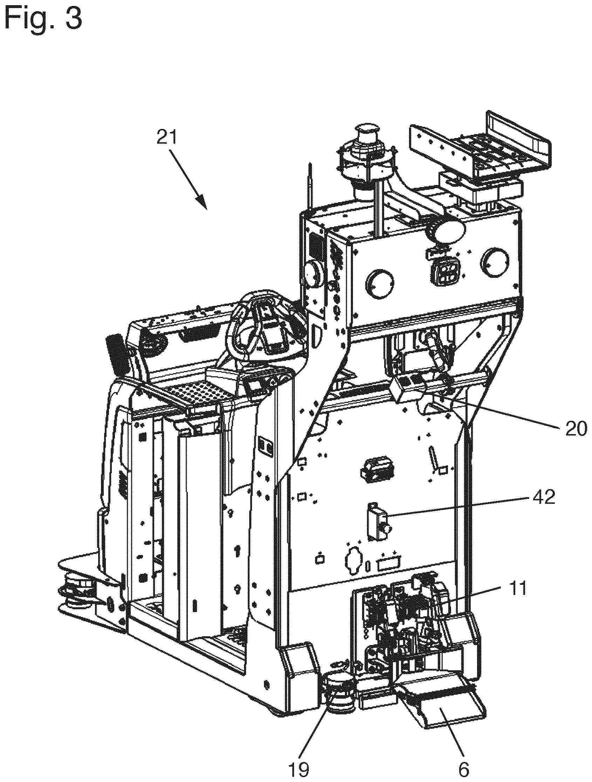

In Fig. 3 ist in schematisch vereinfachter Perspektivdarstellung das Flurförderzeug 21 gezeigt. Dieses umfasst auf seiner Rückseite ein Betätigungselement 20, welches dazu eingerichtet ist, den Verriegelungsaktor 8 derart manuell anzusteuern, dass dieser den Kupplungsbolzen 4 derart betätigt, dass der Kupplungsbolzen 4 durch das Kupplungsauge 26 geschoben wird. Das Betätigungselement 20 ist also insbesondere dazu geeignet, einen manuellen Ankuppelvorgang durchzuführen. Bei dem Flurförderzeug 21, wie es Fig. 3 zeigt, handelt es sich beispielhaft um ein fahrerloses Transportfahrzeug.

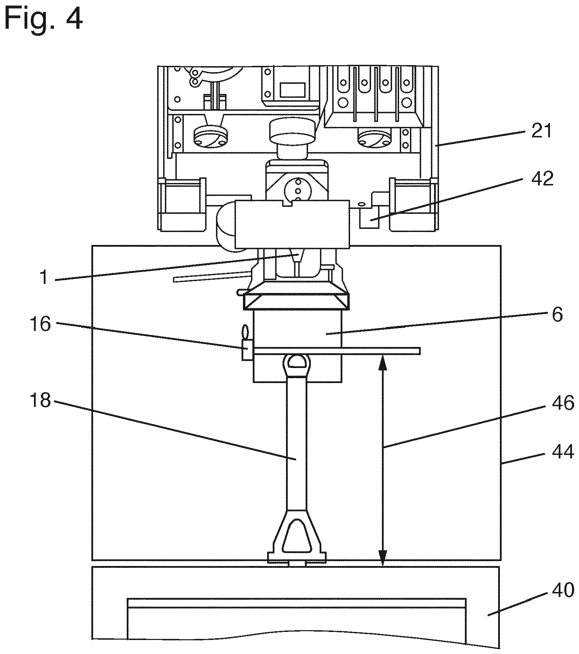

Die schematisch vereinfachte Draufsicht in Fig. 4 zeigt einen hinteren Bereich des Flurförderzeugs 21 und abschnittsweise den Anhänger 40. Bevorzugt bilden das Flurförderzeug 21 und der Anhänger 40 ein System. An der Rückseite des Flurförderzeugs 21 befindet sich beispielsweise ein Umfeldüberwachungssensor 42, der dazu eingerichtet ist, in einer Umgebung des Flurförderzeugs 21 ein zusätzliches Schutzfeld 44 aufzuspannen. Alternativ kann zu diesem Zweck der Personenschutzsensor 19 und gegebenenfalls weitere am Flurförderzeug 21 vorhandene Sensoren eingesetzt werden. Die Steuereinheit 28 ist dazu eingerichtet, festzustellen, ob sich der Kupplungsbolzen 4 in einer geöffneten oder in einer geschlossenen Stellung befindet. Ferner ist die Steuereinheit 28 dazu eingerichtet ist, eine Position, Form, Ausdehnung und/oder Fläche des zusätzlichen Schutzfelds 44 in Abhängigkeit der Stellung des Kupplungsbolzens 4 zu verändern.

Das zusätzliche Schutzfeld 44 erstreckt sich beispielsweise zwischen einer Rückseite des Flurförderzeugs 21 und einer Vorderseite des Anhängers 40. Es dient dazu, sicherzustellen, dass sich keine Personen in diesem Bereich befinden, welcher während des Schleppbetriebs und des Ankuppelvorgangs als Gefahrenbereich einzustufen ist. Die Steuereinheit 28 ist dazu eingerichtet, festzustellen, ob sich der Kupplungsbolzen 4 in einer geöffneten oder in einer geschlossenen Stellung befindet. Dies erfolgt beispielsweise durch Auslesen der Signale der Näherungssensoren 11 bis 13. In der geschlossenen Stellung des Kupplungsbolzens 4 wird das zusätzliche Schutzfeld 44 auf den in Fig. 4 gezeigten Bereich erweitert, welcher sich ausgehend von der Maulkupplung 1 in einer von dem Flurförderzeug 21 weg weisenden Richtung erstreckt, in welche sich die Maulkupplung 1 öffnet. Das zusätzliche Schutzfeld 44 erstreckt sich dabei zumindest näherungsweise so weit, wie eine Deichsellänge 46 der Deichsel 18 des Anhängers 40.

Gemäß einem weiteren Ausführungsbeispiel ist vorgesehen, dass die Steuereinheit 28 dazu eingerichtet ist, das zusätzliche Schutzfeld 44 in einer Fläche, in welcher die Maulkupplung vorhanden ist, nur dann zu aktivieren, wenn für die Steuereinheit 28 feststellbar ist, dass der Kupplungsbolzen 4 sich in geöffneter Stellung befindet und das Flurförderzeug 21 stillsteht oder rückwärtsfährt. Auch dieses beispielsweise von dem zumindest einen Umfeldüberwachungssensor 42 oder dem Personenschutzsensor 19 aufgespannte zusätzliche Schutzfeld 44 kann sich ausgehend von der Maulkupplung 1 in einer von dem Flurförderzeug 21 weg weisenden Richtung, in welche sich die Maulkupplung 1 öffnet, und zwar zumindest bis zu einer vorgegebenen Entfernung, welche insbesondere zumindest näherungsweise einer Deichsellänge 46 eines Anhängers 40 entspricht, erstrecken.

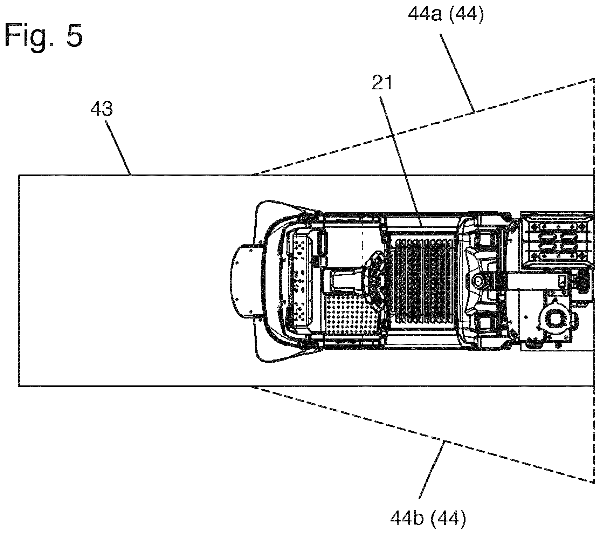

Fig. 5 zeigt eine schematisch vereinfachte Draufsicht auf ein Flurförderzeug 21. Um das Flurförderzeug 21 herum ist wie bei autonom oder teilautonom fahrenden Fahrzeugen üblich, ein Schutzfeld 43 aufgespannt. Hierzu sind verschiedene Sensoren am Flurförderzeug 21 vorhanden. Gemäß einem weiteren vorteilhaften Ausführungsbeispiel ist die Steuereinheit 28 dazu eingerichtet, eine Position, Form, Ausdehnung und/oder Fläche des Schutzfelds 43 zu verändern oder weitere zusätzliche Schutzfelder zu definieren. Beispielsweise wird ein zusätzliches Schutzfeld 44 definiert, welches nicht nur in Abhängigkeit der Stellung des Kupplungsbolzens 4, sondern auch in Abhängigkeit eines Lenkeinschlags des Flurförderzeugs 21 verändert werden kann.

In diesem Zusammenhang ist insbesondere vorgesehen, dass bei einem Lenkeinschlag nach rechts, welcher einen vorgegebenen Grenzwert überschreitet, das Schutzfeld 43 durch das zusätzliche Schutzfeld 44a auf der rechten Seite des Flurförderzeugs 21 vergrößert wird. In analoger Weise ist ferner insbesondere vorgesehen, dass bei einem Lenkeinschlag nach links, welcher einen vorgegebenen weiteren Grenzwert überschreitet, das Schutzfeld 43 durch das zusätzliche Schutzfeld 44b auf der linken Seite des Flurförderzeugs 21 vergrößert wird.

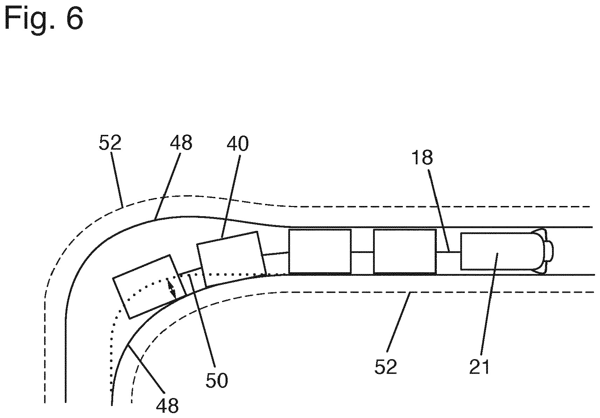

Fig. 6 zeigt in einer schematisch vereinfachten Draufsicht ein Flurförderzeug 21 mit mehreren Anhängern 40 während einer Kurvenfahrt. Es ist mit durchgezogener Linie ein tatsächlicher Fahrbereich 48 des Zuggespanns, also eine Fläche, welche von dem Flurförderzeug 21 oder den Anhängern 40 überstrichen wird, dargestellt. Mit gepunkteter Linie ist im Bereich der Kurve eine Grenze eines Fahrbereichs 50 dargestellt, den das Flurförderzeug 21 allein, d.h. ohne die Anhänger 40 überstreicht. Es ist allgemein bekannt, dass Anhänger 40 bei Kurvenfahrt auf einem weiter innen liegenden Radius als das Zugfahrzeug, in diesem Fall das Flurförderzeug 21, laufen. Hieraus ergibt sich eine Abweichung der überstrichenen Bereiche 48, 50 in den Kurven, welche in ihrem Maximum mit einem Pfeil markiert ist.

Um diesem Effekt im Hinblick auf die Gestaltung von Form und Größe des Schutzfelds gerecht zu werden, wird die im Zusammenhang mit Fig. 5 beschriebene Anpassung des Schutzfelds 43 vorgenommen. In Fig. 6 ist mit gestrichelter Linie der von dem zusätzlichen Schutzfeld 44 überstrichene Bereich 52 dargestellt. Auch die bei Kurvenfahrt weiter innen laufenden Anhänger 40 verlassen diesen Bereich 52 nicht. Vorteilhaft wird gemäß der oben genannten Ausführungsformen ein Flurförderzeug, welches als Zugfahrzeug einsetzbar ist, bereitgestellt, welches einerseits autonom betreibbar ist, und welches andererseits ein äußerst hohes Sicherheitsniveau bietet.

Die Abmessungen des Personenschutz-Sicherheitsbereichs 38 können an den individuellen Einsatzfall, beispielsweise die Bauweise des Anhängers 40 angepasst werden. Dabei ist zu beachten, dass der Anhänger 40 selbst nicht als Hindernis erkannt wird, da sonst kein Ankuppelvorgang möglich ist. Wenn bei einer Rückwärtsfahrt des Flurförderzeugs 21 der Personenschutz-Sicherheitsbereich 38 verletzt wird, stoppt das Flurförderzeug 21 und fährt erst weiter, wenn der Personenschutz-Sicherheitsbereich 38 frei ist. Zusätzlich werden alle Funktionen des automatischen Ankuppelns unterbrochen.

### Bezugszeichenliste

- 1: Maulkupplung
- 2: Hebel zum Öffnen
- 3: Hebel zum Schließen
- 4: Kupplungsbolzen
- 5: Einführtrichter
- 5a: unterer Abschnitt
- 6: Höhenausgleichsrampe
- 7: Abkuppelaktor
- 8: Verriegelungsaktor
- 9: Betätigungshebel zum Öffnen
- 10: Betätigungshebel zum Schließen
- 11, 12, 13: Näherungssensoren
- 14, 15: Wendeschütz
- 16: Annäherungssensor
- 17: Verriegelungssensor
- 18: Deichsel
- 19: Personenschutzsensor
- 20: Betätigungselement
- 21: Flurförderzeug
- 22: Kupplungskörper
- 24: Öffnung
- 26: Kupplungsauge
- 28: Steuereinheit
- 30: Datenverbindung
- 32: erster Bereich
- 34: zweiter Bereich
- 36: Sensorbereich
- 38: Personenschutz-Sicherheitsbereich
- 40: Anhänger
- 42: Umfeldüberwachungssensor
- 43: Schutzfeld
- 44, 44a, 44b: zusätzliches Schutzfeld
- 46: Deichsellänge
- 48: Fahrbereich des Gespanns
- 50: Fahrbereich des Flurförderzeugs
- 52: überstrichener Bereich

## Patentansprüche

1. Flurförderzeug (21) mit einer Maulkupplung (1), die einen Kupplungskörper (22) und einen Kupplungsbolzen (4) umfasst, umfassend eine Steuereinheit (28), zumindest einen Verriegelungssensor (17) und einen Verriegelungsaktor (8), welche kommunikationstechnisch miteinander gekoppelt sind, wobei der Verriegelungssensor (17) dazu eingerichtet ist, zu erkennen, ob sich ein Kupplungsauge (26) einer Deichsel (18) eines Anhängers (40) in oder nahe einer Verriegelungsposition innerhalb des Kupplungskörpers (22) befindet, wobei in der Verriegelungsposition die Öffnung (24) des Kupplungsauges (26) mit dem Kupplungsbolzen (4) fluchtet, so dass zum Ankuppeln des Anhängers (40) der Kupplungsbolzen (4) durch das Kupplungsauge (26) geschoben werden kann, und wobei die Steuereinheit (28) dazu eingerichtet ist, Signale des Verriegelungssensors (17) zu empfangen und auszuwerten, und in einem Fall, in dem der Verriegelungssensor (17) erkennt, dass sich das Kupplungsauge (26) in oder nahe der Verriegelungsposition befindet, die Steuereinheit (28) dazu eingerichtet ist, den Verriegelungsaktor (8) derart anzusteuern, dass dieser den Kupplungsbolzen (4) derart betätigt, dass der Kupplungsbolzen (4) durch das Kupplungsauge (26) geschoben wird, wobei insbesondere der Verriegelungssensor (17) ein berührungsloser Sensor, ferner insbesondere ein optischer Sensor, ist, wobei das Flurförderzeug (21) einen Annäherungssensor (16) umfasst, welcher dazu eingerichtet ist, die Gegenwart des Kupplungsauges (26) in einem Sensorbereich (36) zu detektieren, wobei der Annäherungssensor (16) kommunikationstechnisch mit der Steuereinheit (28) gekoppelt ist und die Steuereinheit (28) dazu eingerichtet ist, Signale des Annäherungssensors (16) zu empfangen und auszuwerten, und in einem Fall, in dem der Annäherungssensor (16) erkennt, dass sich das Kupplungsauge (26) in einem Sensorbereich (36) befindet, einen Fahrantrieb des Flurförderzeugs (21) derart anzusteuern, dass eine Fahrgeschwindigkeit des Flurförderzeugs (21) einen Grenzwert für eine vorgesehene Annäherungsgeschwindigkeit nicht überschreitet.

2. Flurförderzeug (21) nach Anspruch 1, **gekennzeichnet durch** eine Höhenausgleichsrampe (6), welche sich zwischen einem bodennahen ersten Bereich (32) und einem zweiten Bereich (34) nahe eines Abschnitts des Kupplungskörpers (22), der einen unteren Teil des Kupplungsmauls bildet, erstreckt, wobei sich die Höhenausgleichsrampe (6) in einer von dem Flurförderzeug (21) weg weisenden Richtung erstreckt, in welche sich die Maulkupplung (1) öffnet, und wobei die Höhenausgleichsrampe (6) dazu eingerichtet ist, das Kupplungsauge (26) der Deichsel (18) des Anhängers (40) aufzunehmen und bis auf eine Ankuppelhöhe zu führen, in welcher das Kupplungsauge (26) von der Maulkupplung (1) aufnehmbar ist.

3. Flurförderzeug (21) nach Anspruch 1 oder 2, **dadurch gekennzeichnet, dass** der Sensorbereich (36) in einem Abschnitt der Höhenausgleichsrampe (6) vorhanden ist.

4. Flurförderzeug (21) nach einem der Ansprüche 1 bis 3, **gekennzeichnet durch** einen Personenschutzsensor (19), welcher zur Überwachung eines Personenschutz-Sicherheitsbereichs (38) eingerichtet ist, wobei sich der Personenschutz-Sicherheitsbereich (38) ausgehend von einer Rückwand des Flurförderzeugs (21) in einer von dem Flurförderzeug (21) weg weisenden Richtung erstreckt, in welche sich die Maulkupplung (1) öffnet, wobei der Personenschutzsensor (19) kommunikationstechnisch mit der Steuereinheit (28) gekoppelt ist und die Steuereinheit (28) dazu eingerichtet ist, Signale des Personenschutzsensors (19) zu empfangen und auszuwerten, und in einem Fall, in dem der Personenschutzsensor (19) erkennt, dass sich eine Person in dem Personenschutz-Sicherheitsbereich (38) befindet, den Verriegelungsaktor (8) derart anzusteuern, dass der Kupplungsbolzen (4) nicht betätigt wird, solange sich die Person in dem Personenschutz-Sicherheitsbereich (38) befindet.

5. Flurförderzeug (21) nach einem der Ansprüche 1 bis 4, **gekennzeichnet durch** zumindest einen Umfeldüberwachungssensor (42), welcher dazu eingerichtet ist, in einer Umgebung des Flurförderzeugs (21) ein zusätzliches Schutzfeld (44, 44a, 44b) aufzuspannen, wobei die Steuereinheit (28) dazu eingerichtet ist, festzustellen, ob sich der Kupplungsbolzen (4) in einer geöffneten oder in einer geschlossenen Stellung befindet, und wobei die Steuereinheit (28) dazu eingerichtet ist, eine Position, Form, Ausdehnung und/oder Fläche des zusätzlichen Schutzfelds (44, 44a, 44b) in Abhängigkeit der Stellung des Kupplungsbolzens (4) zu verändern.

6. Flurförderzeug (21) nach einem der Ansprüche 1 bis 5, **dadurch gekennzeichnet, dass** die Steuereinheit (28) dazu eingerichtet ist, festzustellen, dass der Verriegelungsaktor (8) den Kupplungsbolzen (4) durch das Kupplungsauge (26) geschoben hat und anschließend ein Fahrantrieb das Flurförderzeug (21) in Bewegung versetzt hat, wobei die Steuereinheit (28) ferner dazu eingerichtet ist, nachdem der Fahrantrieb das Flurförderzeug (21) in Bewegung versetzt hat, für zumindest eine vorgegebene Zeitspanne Signale des Verriegelungssensors (17) zu empfangen und auszuwerten, und in einem Fall, in dem eine Auswertung der Signale ergibt, dass sich das Kupplungsauge (26) nicht in der Verriegelungsposition befindet, den Fahrantrieb des Flurförderzeugs (21) zu stoppen.

7. Flurförderzeug (21) nach einem der Ansprüche 1 bis 6, **gekennzeichnet durch** ein Betätigungselement (20), welches dazu eingerichtet ist, den Verriegelungsaktor (8) derart manuell anzusteuern, dass dieser den Kupplungsbolzen (4) derart betätigt, dass der Kupplungsbolzen (4) durch das Kupplungsauge (26) geschoben wird.

8. Flurförderzeug (21) nach einem der Ansprüche 1 bis 7, **dadurch gekennzeichnet, dass** das Flurförderzeug (21) ein fahrerloses Transportfahrzeug ist.

9. System aus einem Flurförderzeug (21) nach einem der Ansprüche 1 bis 8 und einem Anhänger (40) mit einer Deichsel (18) mit einem Kupplungsauge (26).

10. Verfahren zum Ankuppeln eines Anhängers (40) an ein Flurförderzeug (21), wobei das Flurförderzeug (21) mit einer Maulkupplung (1) ausgerüstet ist, die einen Kupplungskörper (22) und einen Kupplungsbolzen (4) umfasst, wobei das Flurförderzeug (21) eine Steuereinheit (28), zumindest einen Verriegelungssensor (17) und einen Verriegelungsaktor (8), welche kommunikationstechnisch miteinander gekoppelt sind, umfasst, wobei ein Verriegelungssensor (17) erkennt, ob sich ein Kupplungsauge (26) einer Deichsel (18) eines Anhängers (40) in oder nahe einer Verriegelungsposition innerhalb des Kupplungskörpers (22) befindet, wobei in der Verriegelungsposition die Öffnung (24) des Kupplungsauges (26) mit dem Kupplungsbolzen (4) fluchtet, so dass zum Ankuppeln des Anhängers (40) der Kupplungsbolzen (4) durch das Kupplungsauge (26) geschoben werden kann, die Steuereinheit (28) Signale des Verriegelungssensors (17) empfängt und auswertet, und in einem Fall, in dem der Verriegelungssensor (17) erkennt, dass sich das Kupplungsauge (26) in oder nahe der Verriegelungsposition befindet, die Steuereinheit (28) den Verriegelungsaktor (8) derart ansteuert, dass dieser den Kupplungsbolzen (4) betätigt und der Kupplungsbolzen (4) durch das Kupplungsauge (26) geschoben wird, wobei insbesondere der Verriegelungssensor (17) berührungslos, ferner insbesondere optisch, erkennt, ob sich das Kupplungsauge (26) der Deichsel (18) des Anhängers (40) in oder nahe der Verriegelungsposition befindet, wobei das Flurförderzeug (21) ferner einen Annäherungssensor (16) umfasst, welcher die Gegenwart des Kupplungsauges (26) in einem Sensorbereich (36) detektiert und der kommunikationstechnisch mit der Steuereinheit (28) gekoppelt ist, wobei die Steuereinheit (28) Signale des Annäherungssensors (16) empfängt und auswertet, und in einem Fall, in dem der Annäherungssensor (16) erkennt, dass sich das Kupplungsauge (26) in einem Sensorbereich (36) befindet, einen Fahrantrieb des Flurförderzeugs (21) derart ansteuert, dass eine Fahrgeschwindigkeit des Flurförderzeugs (21) einen Grenzwert für eine vorgesehene Annäherungsgeschwindigkeit nicht überschreitet.

11. Verfahren nach Anspruch 10, **dadurch gekennzeichnet, dass** das Flurförderzeug (21) eine Höhenausgleichsrampe (6) umfasst, welche sich zwischen einem bodennahen ersten Bereich (32) und einem zweiten Bereich (34) nahe eines Abschnitts des Kupplungskörpers (22), der einen unteren Teil des Kupplungsmauls bildet, erstreckt, wobei sich die Höhenausgleichsrampe (6) in einer von dem Flurförderzeug (21) weg weisenden Richtung erstreckt, in welche sich die Maulkupplung (1) öffnet und wobei die Höhenausgleichsrampe (6) dazu eingerichtet ist, das Kupplungsauge (26) der Deichsel (18) des Anhängers (40) aufzunehmen und bis auf eine Ankuppelhöhe zu führen, in welcher das Kupplungsauge (26) von der Maulkupplung (1) aufnehmbar ist.

12. Verfahren nach Anspruch 10 oder 11, **dadurch gekennzeichnet, dass** der Sensorbereich (36) in einem Abschnitt der Höhenausgleichsrampe (6) vorhanden ist.

13. Verfahren nach einem der Ansprüche 10 bis 12, **dadurch gekennzeichnet, dass** das Flurförderzeug (21) einen Personenschutzsensor (19) umfasst, welcher einen Personenschutz-Sicherheitsbereich (38) überwacht, wobei sich der Personenschutz-Sicherheitsbereich (38) ausgehend von einer Rückwand des Flurförderzeugs (21) in einer von dem Flurförderzeug (21) weg weisenden Richtung erstreckt, in welche sich die Maulkupplung (1) öffnet, wobei der Personenschutzsensor (19) kommunikationstechnisch mit der Steuereinheit (28) gekoppelt ist und die Steuereinheit (28) Signale des Personenschutzsensors (19) empfängt und auswertet, und in einem Fall, in dem der Personenschutzsensor (19) erkennt, dass sich eine Person in dem Personenschutz-Sicherheitsbereich (38) befindet, der Verriegelungsaktor (8) derart angesteuert wird, dass der Kupplungsbolzen (4) nicht betätigt wird, solange sich die Person in dem Personenschutz-Sicherheitsbereich (38) befindet.

14. Verfahren nach einem der Ansprüche 10 bis 13, **dadurch gekennzeichnet, dass** das Flurförderzeug (21) einen Umfeldüberwachungssensor (42) umfasst, welcher in einer Umgebung des Flurförderzeugs (21) ein zusätzliches Schutzfeld (44) aufspannt, wobei die Steuereinheit (28) feststellt, ob sich der Kupplungsbolzen (4) in einer geöffneten oder in einer geschlossenen Stellung befindet, und wobei die Steuereinheit (28) eine Position, Form, Ausdehnung und/oder Fläche des zusätzlichen Schutzfelds (44) in Abhängigkeit der Stellung des Kupplungsbolzens (4) verändert.

15. Verfahren nach einem der Ansprüche 10 bis 14, **dadurch gekennzeichnet, dass** die Steuereinheit (28) feststellt, dass der Verriegelungsaktor (8) den Kupplungsbolzen (4) durch das Kupplungsauge (26) geschoben hat und anschließend ein Fahrantrieb das Flurförderzeug (21) in Bewegung versetzt hat, wobei die Steuereinheit (28) ferner, nachdem der Fahrantrieb das Flurförderzeug (21) in Bewegung versetzt hat, für zumindest eine vorgegebene Zeitspanne Signale des Verriegelungssensors (17) empfängt und auswertet, und in einem Fall, in dem eine Auswertung der Signale ergibt, dass sich das Kupplungsauge (26) nicht in der Verriegelungsposition befindet, den Fahrantrieb des Flurförderzeugs (21) stoppt.

## Claims

1. An industrial truck (21) with a jaw coupling (1) that comprises a coupling body (22) and a coupling pin (4), comprising a control unit (28), at least one locking sensor (17) and a locking actuator (8) that are coupled by communication technology to each other, wherein the locking sensor (17) is configured to detect whether a coupling eye (26) of a drawbar (18) of a trailer (40) is located in or close to a locking position within the coupling body (22), wherein in the locking position, the opening (24) in the coupling eye (26) is flush with the coupling pin (4) so that, to couple the trailer (40), the coupling pin (4) can be shoved through the coupling eye (26), and wherein the control unit (28) is configured to receive and evaluate signals from the locking sensor (17) and, in an instance in which the locking sensor (17) recognizes that the coupling eye (26) is located in or near the locking position, the control unit (28) is configured to control the locking actuator (8) so that it actuates the coupling pin (4) such that the coupling pin (4) is shoved through the coupling eye (26), wherein in particular, the locking sensor (17) is a contactless sensor, further in particular an optical sensor, wherein the industrial truck (21) comprises a proximity sensor (16) that is configured to detect the presence of the coupling eye (26) within a sensor area (36), wherein the proximity sensor (16) is coupled by communication technology to the control unit (28), and the control unit (28) is configured to receive and evaluate signals from the proximity sensor (16) and, in an instance in which the proximity sensor (16) recognizes that the coupling eye (26) is located in a sensor area (36), to control a traction drive of the industrial truck (21) such that a driving speed of the industrial truck (21) does not exceed a limit value for a provided approach speed.

2. The industrial truck (21) according to claim 1, **characterized by** a height adjustment ramp (6) that extends between a first area (32) close to the ground and a second area (34) close to a section of the coupling body (22) that forms a bottom part of the coupling mouth, wherein the height adjustment ramp (6) extends in a direction facing away from the industrial truck (21) in which the jaw coupling (1) opens, and wherein the height adjustment ramp (6) is configured to receive the coupling eye (26) of the drawbar (18) of the trailer (40) and lead to a coupling height at which the coupling eye (26) can be received by the jaw coupling (1).

3. The industrial truck (21) according to claim 1 or 2, **characterized in that** the sensor area (36) is present within a section of the height adjustment ramp (6).

4. The industrial truck (21) according to one of claims 1 to 3, **characterized by** a personal security sensor (19) that is configured to monitor a personal protection safety area (38), wherein the personal protection safety area (38) extends from a rear wall of the industrial truck (21) in a direction facing away from the industrial truck (21) in which the jaw coupling (1) opens, wherein the personal security sensor (19) is coupled by communication technology to the control unit (28), and the control unit (28) is configured to receive and evaluate signals from the personal security sensor (19) and, in an instance in which the personal security sensor (19) recognizes that a person is located within the personal protection safety area (38), to control the locking actuator (8) so that the coupling pin (4) is not actuated as long as the person is located within the personal protection safety area (38).

5. The industrial truck (21) according to one of claims 1 to 4, **characterized by** at least one environment monitoring sensor (42) that is configured to cover an additional protection field (44, 44a, 44b) within an environment of the industrial truck (21), wherein the control unit (28) is configured to establish whether the coupling pin (4) is in an open or in a closed position, and wherein the control unit (28) is configured to change a position, shape, extent and/or area of the additional protection field (44, 44a, 44b) depending on the position of the coupling pin (4).

6. The industrial truck (21) according to one of claims 1 to 5, **characterized in that** the control unit (28) is configured to establish that the locking actuator (8) has shoved the coupling pin (4) through the coupling eye (26), and that a traction drive has then set the industrial truck (21) in motion, wherein after the traction drive has set the industrial truck (21) in motion, the control unit (28) is further configured to receive and evaluate signals from the locking sensor (17) for at least a given time period and, in an instance in which an evaluation of the signals indicates that the coupling eye (26) is not located in the locking position, to stop the traction drive of the industrial truck (21).

7. The industrial truck (21) according to one of claims 1 to 6, **characterized by** an actuating element (20) that is configured to manually control the locking actuator (8) so that it actuates the coupling pin (4) such that the coupling pin (4) is shoved through the coupling eye (26).

8. The industrial truck (21) according to one of claims 1 to 7, **characterized in that** the industrial truck (21) is a driverless transport vehicle.

9. A system consisting of an industrial truck (21) according to one of claims 1 to 8 and a trailer (40) with a drawbar (18) with a coupling eye (26).

10. A method for coupling a trailer (40) to an industrial truck (21), wherein the industrial truck (21) is equipped with a jaw coupling (1) that comprises a coupling body (22) and a coupling pin (4), wherein the industrial truck (21) comprises a control unit (28), at least one locking sensor (17) and a locking actuator (8) that are coupled by communication technology to each other, wherein a locking sensor (17) recognizes whether a coupling eye (26) of a drawbar (18) of a trailer (40) is located in or close to a locking position within the coupling body (22), wherein in the locking position, the opening (24) in the coupling eye (26) is flush with the coupling pin (4) so that, to couple the trailer (40), the coupling pin (4) can be shoved through the coupling eye (26), the control unit (28) receives and evaluates signals from the locking sensor (17) and, in an instance in which the locking sensor (17) recognizes that the coupling eye (26) is located in or near the locking position, the control unit (28) controls the locking actuator (8) so that it actuates the coupling pin (4), and the coupling pin (4) is shoved through the coupling eye (26), wherein in particular, the locking sensor (17) detects without contact, in particular optically, whether the coupling eye (26) of the drawbar (18) of the trailer (40) is in or near the locking position, wherein the industrial truck (21) furthermore comprises a proximity sensor (16) that detects the presence of the coupling eye (26) within a sensor area (36) and is coupled by communication technology to the control unit (28), wherein the control unit (28) receives and evaluates signals from the proximity sensor (16) and, in an instance in which the proximity sensor (16) recognizes that the coupling eye (26) is located in a sensor area (36), controls a traction drive of the industrial truck (21) such that a driving speed of the industrial truck (21) does not exceed a limit value for a provided approach speed.

11. The method according to claim 10, **characterized in that** the industrial truck (21) comprises a height adjustment ramp (6) that extends between a first area (32) close to the ground and a second area (34) close to a section of the coupling body (22) that forms a bottom part of the coupling mouth, wherein the height adjustment ramp (6) extends in a direction facing away from the industrial truck (21) in which the jaw coupling (1) opens, and wherein the height adjustment ramp (6) is configured to receive the coupling eye (26) of the drawbar (18) of the trailer (40) and lead to a coupling height at which the coupling eye (26) can be received by the jaw coupling (1).

12. The method according to claim 10 or 11, **characterized in that** the sensor area (36) is present within a section of the height adjustment ramp (6).

13. The method according to one of claims 10 to 12, **characterized in that** the industrial truck (21) comprises a personal security sensor (19) that monitors a personal protection safety area (38), wherein the personal protection safety area (38) extends from a rear wall of the industrial truck (21) in a direction facing away from the industrial truck (21) in which the jaw coupling (1) opens, wherein the personal security sensor (19) is coupled by communication technology to the control unit (28), and the control unit (28) receives and evaluates signals from the personal security sensor (19) and, in an instance in which the personal security sensor (19) recognizes that a person is located within the personal protection safety area (38), controls the locking actuator (8) so that the coupling pin (4) is not actuated as long as the person is located within the personal protection safety area (38).

14. The method according to one of claims 10 to 13, **characterized in that** the industrial truck (21) comprises an environment monitoring sensor (42) that covers an additional protection field (44) within an environment of the industrial truck (21), wherein the control unit (28) establishes whether the coupling pin (4) is in an open or in a closed position, and wherein the control unit (28) changes a position, shape, extent and/or area of the additional protection field (44) depending on the position of the coupling pin (4).

15. The method according to one of claims 10 to 14, **characterized in that** the control unit (28) establishes that the locking actuator (8) has shoved the coupling pin (4) through the coupling eye (26) and that a traction drive has then set the industrial truck (21) in motion, wherein after the traction drive has set the industrial truck (21) in motion, the control unit (28) furthermore receives and evaluate signals from the locking sensor (17) for at least a given time period and, in an instance in which an evaluation of the signals indicates that the coupling eye (26) is not located in the locking position, stops the traction drive of the industrial truck (21).

## Revendications

1. Chariot de manutention (21) avec un accouplement à mâchoire (1), qui comprend un corps d'accouplement (22) et une broche d'accouplement (4), comprenant une unité de commande (28), au moins un capteur de verrouillage (17) et un actionneur de verrouillage (8), qui sont reliés entre eux par une technique de communication, le capteur de verrouillage (17) étant conçu pour détecter si un anneau d'accouplement (26) d'un timon (18) d'une remorque (40) se trouve dans ou à proximité d'une position de verrouillage à l'intérieur du corps d'accouplement (22), l'ouverture (24) de l'anneau d'accouplement (26) étant, dans la position de verrouillage, alignée avec la broche d'accouplement (4), de sorte que pour l'accouplement de la remorque (40), la broche d'accouplement (4) est apte à être poussée à travers l'anneau d'accouplement (26), et dans lequel l'unité de commande (28) est conçue de manière à recevoir et évaluer des signaux du capteur de verrouillage (17), et dans un cas où le capteur de verrouillage (17) détecte que l'anneau d'accouplement (26) se trouve dans ou près de la position de verrouillage, l'unité de commande (28) est agencée pour commander l'actionneur de verrouillage (8) de telle sorte que celui-ci actionne la broche d'accouplement (4) de telle sorte que la broche d'accouplement (4) soit poussée à travers l'anneau d'accouplement (26), le capteur de verrouillage (17) étant notamment un capteur sans contact, en particulier un capteur optique, le chariot de manutention (21) comprenant un capteur de proximité (16) qui est conçu pour détecter la présence de l'anneau d'accouplement (26) dans une zone de détection (36), le capteur de proximité (16) étant relié à l'unité de commande (28) par une technique de communication et l'unité de commande (28) étant conçue pour recevoir et évaluer des signaux provenant du capteur de proximité (16), et, dans un cas où le capteur de proximité (16) détecte que l'anneau d'accouplement (26) se trouve dans une zone de détection (36), pour commander un entraînement de déplacement du chariot de manutention (21) de telle sorte qu'une vitesse de déplacement du chariot de manutention (21) ne dépasse pas une valeur limite pour une vitesse d'approche prévue.

2. Chariot de manutention (21) selon la revendication 1, **caractérisé par** une rampe (6) de compensation de hauteur qui s'étend entre une première zone (32) proche du sol et une deuxième zone (34) proche d'une section du corps d'accouplement (22) qui forme une partie inférieure de la mâchoire d'accouplement, la rampe (6) de compensation de hauteur s'étendant dans une direction opposée au chariot de manutention (21), dans laquelle s'ouvre l'accouplement à mâchoire (1), et la rampe (6) de compensation de hauteur étant conçue pour recevoir l'anneau d'accouplement (26) du timon (18) de la remorque (40) et pour le guider jusqu'à une hauteur d'accouplement dans laquelle l'anneau d'accouplement (26) est apte à être reçu par l'accouplement à mâchoire (1).

3. Chariot de manutention (21) selon la revendication 1 ou la revendication 2, **caractérisé en ce que** la zone de détection (36) est présente dans une partie de la rampe (6) de compensation de hauteur.

4. Chariot de manutention (21) selon l'une des revendications 1 à 3, **caractérisé par** un capteur (19) de protection des personnes qui est conçu pour surveiller une zone de sécurité (38) de protection des personnes, la zone de sécurité (38) de protection des personnes s'étendant à partir d'une paroi arrière du chariot de manutention (21), dans une direction opposée au chariot de manutention (21), dans laquelle s'ouvre l'accouplement à mâchoire (1), le capteur (19) de protection des personnes étant relié à l'unité de commande (28) par une technique de communication et l'unité de commande (28) étant conçue pour recevoir et évaluer des signaux du capteur (19) de protection des personnes et, dans un cas où le capteur (19) de protection des personnes détecte qu'une personne se trouve dans la zone de sécurité (38) de protection des personnes, pour commander l'actionneur de verrouillage (8) de telle sorte que la broche d'accouplement (4) ne soit pas actionnée tant que la personne se trouve dans la zone de sécurité (38) de protection des personnes.

5. Chariot de manutention (21) selon l'une des revendications 1 à 4, **caractérisé par** au moins un capteur (42) de surveillance de l'environnement, qui est conçu pour créer un champ de protection supplémentaire (44, 44a, 44b) dans un environnement du chariot de manutention (21), l'unité de commande (28) étant conçue pour déterminer si la broche d'accouplement (4) se trouve dans une position d'ouverture ou dans une position de fermeture, et l'unité de commande (28) étant conçue pour modifier une position, une forme, une extension et/ou une surface du champ de protection supplémentaire (44, 44a, 44b) en fonction de la position de la broche d'accouplement (4).

6. Chariot de manutention (21) selon l'une des revendications 1 à 5, **caractérisé en ce que** l'unité de commande (28) est agencée pour constater que l'actionneur de verrouillage (8) a poussé la broche d'accouplement (4) à travers l'anneau d'accouplement (26) et qu'ensuite un entraînement de déplacement a mis le chariot de manutention (21) en mouvement, l'unité de commande (28) étant en outre agencée pour, après que l'entraînement de déplacement ait mis le chariot de manutention (21) en mouvement, recevoir et évaluer des signaux du capteur de verrouillage (17) pendant au moins un laps de temps prédéfini, et, dans un cas où une évaluation des signaux montre que l'anneau d'accouplement (26) ne se trouve pas dans la position de verrouillage, pour arrêter l'entraînement de déplacement du chariot de manutention (21).

7. Chariot de manutention (21) selon l'une des revendications 1 à 6, **caractérisé par** un élément d'actionnement (20) qui est conçu pour commander manuellement l'actionneur de verrouillage (8) de telle sorte que celui-ci actionne la broche d'accouplement (4) de manière à ce que la broche d'accouplement (4) soit poussée à travers l'anneau d'accouplement (26).

8. Chariot de manutention (21) selon l'une des revendications 1 à 7, **caractérisé en ce que** le chariot de manutention (21) est un véhicule de transport sans conducteur.

9. Système composé d'un chariot de manutention (21) selon l'une des revendications 1 à 8 et d'une remorque (40) avec un timon (18) ayant un anneau d'accouplement (26).

10. Procédé d'accouplement d'une remorque (40) à un chariot de manutention (21), le chariot de manutention (21) étant équipé d'un accouplement à mâchoire (1) qui comprend un corps d'accouplement (22) et une broche d'accouplement (4), le chariot de manutention (21) comprenant une unité de commande (28), au moins un capteur de verrouillage (17) et un actionneur de verrouillage (8) qui sont reliés entre eux par une technique de communication, un capteur de verrouillage (17) détectant si un anneau d'accouplement (26) d'un timon (18) d'une remorque (40) se trouve dans ou près d'une position de verrouillage à l'intérieur du corps d'accouplement (22), l'ouverture (24) de l'anneau d'accouplement (26) étant alignée avec la broche d'accouplement (4) dans la position de verrouillage, de sorte que, pour atteler la remorque (40), la broche d'accouplement (4) est apte à être poussée à travers l'anneau d'accouplement (26), l'unité de commande (28) reçoit et évalue des signaux du capteur de verrouillage (17), et dans un cas où le capteur de verrouillage (17) détecte que l'anneau d'accouplement (26) se trouve dans ou près de la position de verrouillage, l'unité de commande (28) commande l'actionneur de verrouillage (8) de telle sorte que celui-ci actionne la broche d'accouplement (4) et que la broche d'accouplement (4) soit poussée à travers l'anneau d'accouplement (26), le capteur de verrouillage (17) détectant en particulier sans contact, et notamment de manière optique, si l'anneau d'accouplement (26) du timon (18) de la remorque (40) se trouve dans ou près de la position de verrouillage, le chariot de manutention (21) comprenant en outre un capteur de proximité (16), lequel détecte la présence de l'anneau d'accouplement (26) dans une zone de détection (36) et qui est relié à l'unité de commande (28) par une technique de communication, l'unité de commande (28) recevant et évaluant des signaux du capteur de proximité (16), et dans un cas où le capteur de proximité (16) détecte que l'anneau d'accouplement (26) se trouve dans une zone de détection (36), commande un entraînement de déplacement du chariot de manutention (21) de telle sorte qu'une vitesse de déplacement du chariot de manutention (21) ne dépasse pas une valeur limite pour une vitesse d'approche prévue.

11. Procédé selon la revendication 10, **caractérisé en ce que** le chariot de manutention (21) comprend une rampe (6) de compensation de hauteur qui s'étend entre une première zone (32) proche du sol et une deuxième zone (34) proche d'une section du corps d'accouplement (22) qui forme une partie inférieure de la mâchoire d'accouplement, la rampe (6) de compensation de hauteur s'étendant dans une direction s'éloignant du chariot de manutention (21), dans laquelle l'accouplement à mâchoire (1) s'ouvre, et la rampe (6) de compensation de hauteur étant adaptée pour recevoir l'anneau d'accouplement (26) du timon (18) de la remorque (40) et pour le guider jusqu'à une hauteur d'accouplement dans laquelle l'anneau d'accouplement (26) est apte à être reçu par l'accouplement à mâchoire (1).

12. Procédé selon la revendication 10 ou 11, **caractérisé en ce que** la zone de détection (36) est présente dans une partie de la rampe (6) de compensation de hauteur.

13. Procédé selon l'une des revendications 10 à 12, **caractérisé en ce que** le chariot de manutention (21) comprend un capteur (19) de protection des personnes qui surveille une zone de sécurité (38) de protection des personnes, la zone de sécurité (38) de protection des personnes s'étendant à partir d'une paroi arrière du chariot de manutention (21), dans une direction opposée au chariot de manutention (21), dans laquelle s'ouvre l'accouplement à mâchoire (1), le capteur (19) de protection des personnes étant relié à l'unité de commande (28) par une technique de communication et l'unité de commande (28) recevant et évaluant des signaux du capteur (19) de protection des personnes, et dans un cas où le capteur (19) de protection des personnes détecte qu'une personne se trouve dans la zone de sécurité (38) de protection des personnes, l'actionneur de verrouillage (8) étant commandé de telle sorte que la broche d'accouplement (4) n'est pas actionnée tant que la personne se trouve dans la zone de sécurité (38) de protection des personnes.

14. Procédé selon l'une des revendications 10 à 13, **caractérisé en ce que** le chariot de manutention (21) comprend un capteur (42) de surveillance de l'environnement qui crée un champ de protection supplémentaire (44) dans un environnement du chariot de manutention (21), l'unité de commande (28) déterminant si la broche d'accouplement (4) se trouve dans une position d'ouverture ou dans une position de fermeture, et l'unité de commande (28) modifiant une position, une forme, une étendue et/ou une surface du champ de protection supplémentaire (44) en fonction de la position de la broche d'accouplement (4).

15. Procédé selon l'une des revendications 10 à 14, **caractérisé en ce que** l'unité de commande (28) détermine que l'actionneur de verrouillage (8) a poussé la broche d'accouplement (4) à travers l'anneau d'accouplement (26) et qu'un entraînement de déplacement a ensuite mis le chariot de manutention (21) en mouvement, l'unité de commande (28) constatant en outre, après que l'entraînement de déplacement ait mis le chariot de manutention (21) en mouvement, reçoit et évalue pendant au moins un laps de temps prédéterminé des signaux du capteur de verrouillage (17), et dans un cas où une évaluation des signaux montre que l'anneau d'accouplement (26) ne se trouve pas dans la position de verrouillage, arrête l'entraînement de déplacement du chariot de manutention (21).
